(19) **Europäisches Patentamt / European Patent Office / Office européen des brevets**

(11) **EP 2 759 373 B1**

(12) **EUROPEAN PATENT SPECIFICATION**

(45) Date of publication and mention
of the grant of the patent:
**21.08.2019 Bulletin 2019/34**

(51) Int Cl.:
**B24B 39/00** *(2006.01)*    **B24B 49/08** *(2006.01)*

(21) Application number: **13461560.8**

(22) Date of filing: **13.11.2013**

(54) **A method of fluid pressure control in a hydrostatic burnishing tool and hydrostatic burnishing tool**

Verfahren zum Kontrollieren des Drucks eines hydrostatischen Glättwerkzeugs und hydrostatisches Glättwerkzeug

Methode de control de pression d'un outil de brunissage au laminoir hydrostatique et outil même

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.01.2013 PL 40259813**

(43) Date of publication of application:
**30.07.2014 Bulletin 2014/31**

(73) Proprietor: **Zachodniopomorski Uniwersytet Technologiczny w Szczecinie 70-310 Szczecin (PL)**

(72) Inventors:
• **Gubala, Rafal**
  **71-174 Szczecin (PL)**
• **Grochala, Daniel**
  **66-500 Strzelce Krajenskie (PL)**
• **Olszak, Wieslaw**
  **71-793 Szczecin (PL)**

(74) Representative: **Zawadzka, Renata Zachodniopomorski Uniwersytet Technologiczny w Szczecinie Dzial Wynalazczosci i Ochrony Patentowej Al. Piastow 17 70-310 Szczecin (PL)**

(56) References cited:
**EP-A1- 0 353 427    DE-A1- 19 534 631**

**Description**

The invention defines a method of controlling fluid pressure in a hydrostatic burnishing tool as well as a hydrostatic tool for burnishing surfaces on machine tools, including coolant-through-spindle milling machines and machining centres.

Tools using hydraulic pressure with heads with hydrostatic bearings to support the burnishing element (EP0353376A1; DE19534631A1; EP1275472A2; WO2005/023488A1) constitute a separate class of burnishing tools. Their fundamental advantage is that the force applied during burnishing can be controlled. External hydraulic power units are used to run hydraulic tools. However, because hydrostatic pressure units are expensive the tools run by them did not gain the popularity enjoyed by mechanically powered tools. Another limitation of hydrostatic tools is that their machining area is further reduced by hydraulic connecting hoses, as e.g. known from the closest prior art EP 0 353 427 A1. This both limits the accessible machining area and makes it very difficult to control tool trajectory in machining. It is particularly true for machining of free surfaces conducted on CNC milling machines and multi-axis machining centres. A hydrostatic burnisher contains a single acting hydraulic actuator which generates burnishing force while its burnishing element (usually a ball, less often a disc) is supported in a hydrostatic bearing which improves the durability of both the burnishing element and the bearing. Such tools require a drive system to provide adequate pressure and efficiency. Hydrostatic burnishers are widely used in machining a surface finish, mainly on lathes. ECOROLL is a supplier of hydrostatic burnishing tools for lathe machining. However, the company does not produce tools for machining of complex surfaces powered with coolant-through-spindle system on machining centres (www.ecorol1.de). The known hydrostatic burnishing tools powered by hydraulic power units usually use solutions of two different pressures, while $p_2 > p_1$. To enable roller burnishing with large forces using rollers with small diameters (which in complex, hardened geometric surfaces of workpieces is often the case), high hydraulic pressure is required. While pressure of coolant as often used in modern CNC milling machines and machining centres vary in a wide range and depends on the quality of the machine. However there is increasing trend observed of the coolant's pressure in the machines supply year to year.

A method of fluid pressure control in a hydrostatic burnishing tool according to the invention is defined in claim 1. Fluid flow is divided into two galleries with $p_1$ and $p_2$ pressure. The flow of a lubricating coolant with pressure $p_1$, controlled by micro valves that control a one-way actuator, consisting of a piston and a cylinder, is directed over the piston. The flow with pressure $p_2$, controlled by micro valves that control the pressure in a hydrostatic bearing, is directed on the burnishing element which is supported by the bearing bush. In this option, the burnishing element is mounted with the hydrostatic bearing.

If a burnishing element with a small diameter (smaller than the piston's diameter) is used, and if a machine tool does not provide a sufficient pressure, it is necessary to use hydrostatically supported ball. In this option, the burnishing element is mounted with the support ball.

If during machining the tool applies, through the burnishing element, a large burnishing force, it is necessary to use intermediate ball bearings placed between the burnishing element and the support ball. It minimizes compressive forces acting on the contact points between the burnishing element, intermediate ball bearings and the support ball.

A hydrostatic burnishing tool for burnishing surfaces on machine tools according to the invention is provided by claim 4. The hydraulic control system consists of a single acting hydraulic actuator (which contains a piston, a cylinder and a spring), micro valves that control the actuator, micro valves that control the pressure in a hydrostatic bearing, and a bearing of the burnishing element. In this variant, the bearing of the burnishing element is a hydrostatic one. A micro-hydraulic pressure control system is mounted inside the main body of a tool. The cylinder, the main body, the piston and the bearing bushing contain coolant galleries which distributes the lubricating coolant from the micro-hydraulic system to the burnishing element.

The bearing nut contains, between the bearing bushing and the burnishing element, a support ball.

It is necessary to use a support ball if the diameter of a burnishing element is smaller than that of a piston. The hydrostatic bearing support of a support ball allows to maintain the rolling operation of the burnishing element. A support ball is used when low fluid pressure (available in the lubrication-cooling system of a tool) makes it difficult to apply hydrostatic ball bearing support for the burnishing element. Particularly for rolling bearings of burnishing elements with a small diameter $d_{kn}$.

It is favourable if a tool contains intermediate ball bearings in between a support roller and the burnishing element. It minimizes compressive forces acting on the contact points between the burnishing element, intermediate ball bearings and the support ball. It is also favourable if a micro-hydraulic unit is fitted with P/I pressure and N/I force transducers connected so that 'feedback' exists between both transducers. Transducers should be connected to create signal close loop. The tool has micro-hydraulic unit equipped with blow off micro-valve which controls the operation of the actuator.

One of the advantages of the presented solution is that the tool contains inside it all elements of the control system. To maintain a small size of the tool, the system is composed of micro-hydraulic components. As a result dedicated external hydraulic power unit fitted with all control system is no longer necessary. No additional hoses are necessary, therefore program of a multi-axis trajectory of a tool and its automatic replacement is impossible. Different variants of the tool - intermediate ball bearings - enable burnishing with large forces. A support roller enables burnishing with elements that have small diameters.

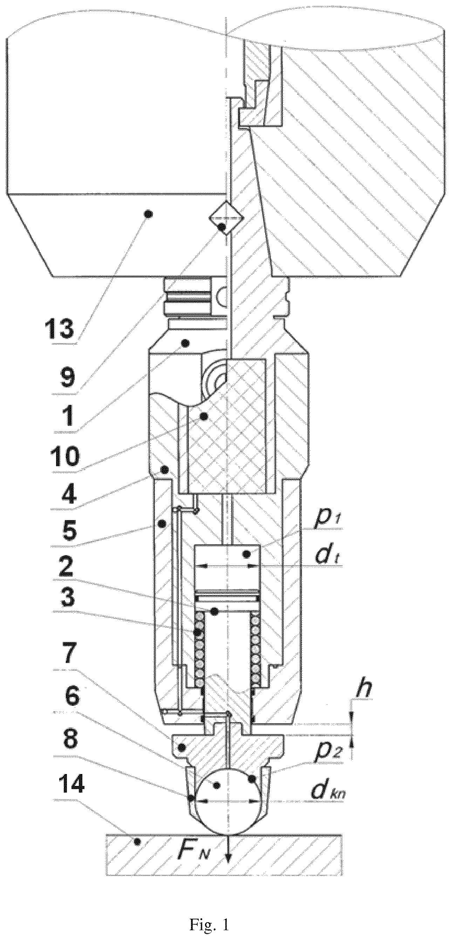

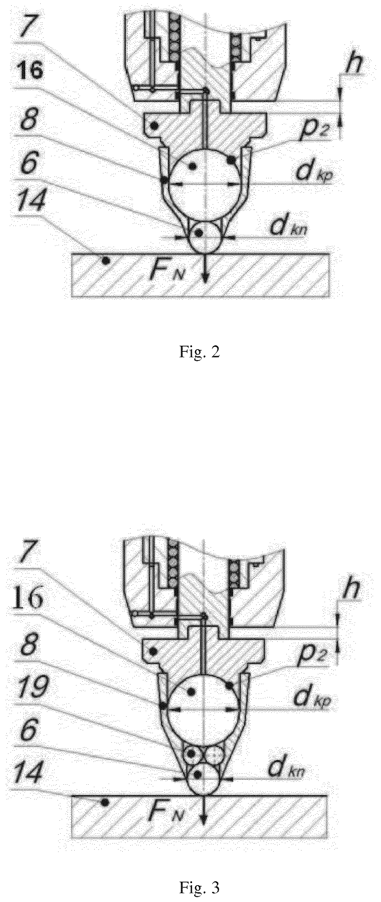

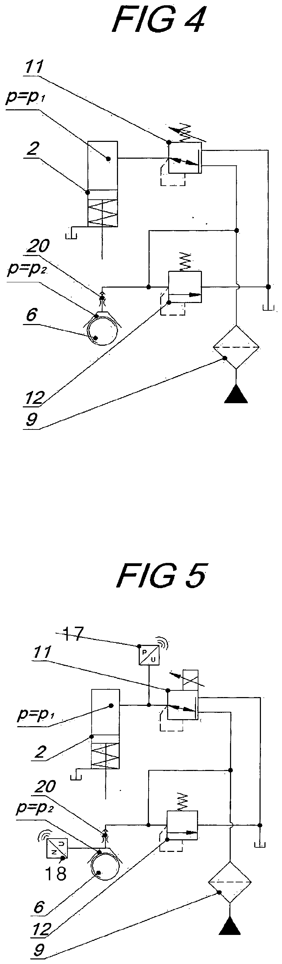

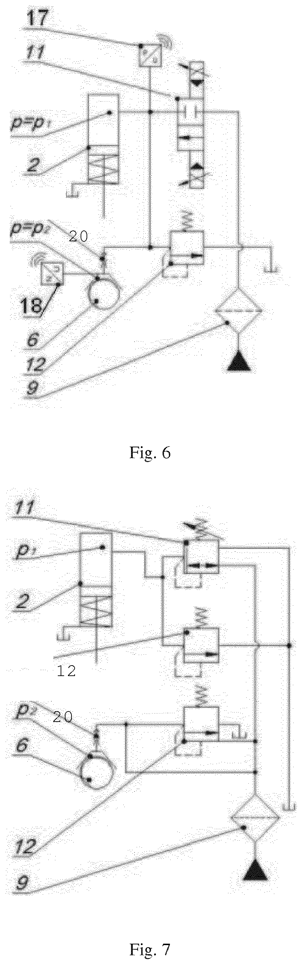

The invention is presented in more detail in drawing and examples. Fig. 1 presents the tool mounted in the spindle of a machine tool in a longitudinal cross-section in a sectioned view. Fig. 2 shows a part of the tool with a support ball in a longitudinal section. Fig. 3 shows a part of the tool with a support ball and intermediate roller bearings in a longitudinal cross-section. Fig. 4 presents a schematic of a single-circuit micro-hydraulic control system. Fig. 5 presents a schematic of the micro-hydraulic control system with wireless pressure and force transducers, P/I and N/I respectively. Fig. 6 shows a schematic of the micro-hydraulic control system with a proportional pressure reducing valve. Fig. 7 presents a schematic of a double-circuit micro-hydraulic control system based on pressure reducing valve. The micro-hydraulic solution used in the control unit and presented in Figures 4, 5 and 6 can be used on coolant-through-spindle CNC machine tools, particularly at low pressure supply. The solution used in the control unit as shown in Fig. 7 is particularly predisposed for CNC machine tools equipped with high-pressure lubricating-cooling systems providing coolant through the spindle.

**Example I**

The hydrostatic burnishing tool (shown in Fig. 1) for burnishing surfaces on machine tools consists of a main body of the tool 1, a piston 2, a coil spring 3, a cylinder 4, a body encasement 5, a burnishing element 6, a bearing bush 7 and a nut 8. Piston 2 and cylinder 4 make up single acting actuator. Main body 1 is fitted with screen filter 9 and mounting bracket. Inside main body 1, there is a micro-hydraulic system 10 inserted. Piston 2 is connected to a micro-valve 11 which controls piston 2 operation and to a micro-valve 12 which controls pressure in the bearing and the burnishing element 6. The tool is connected to a spindle 13 of a machine tool. A supply gallery, which transports the lubricating coolant from the micro-hydraulic system 9 to burnishing element 6, goes through cylinder 4, body encasement 5, piston 2 and bearing bush 7.

The tool has a hydraulic drive using a lubricating coolant supplied centrally from the tool on spindle 13.

The hydraulic fluid from the cooling-lubricating system is supplied from spindle 13 to main body 1. The fluid is then directed to micro-hydraulic control unit 10. Then, the fluid with pressure $p_1$ flows over piston 2 causing piston 2 displacement and spring 2 deflection until the operating position is reached. The operating position is defined by a value h of the initial tension of spring 3. Spring 3 is responsible for the return of burnishing element 6 into "zero" position when pressure in piston internal space $p_1=0$. Piston 2 moves in body encasement 5. The lubricating coolant from micro-hydraulic control unit 10 is forced by pressure $p_2$ to move over burnishing element (ball) 6 with diameter $d_{kn}$. Because the diameter of piston 2 is the same as the diameter of burnishing element 6, it is possible to maintain hydrostatic bearing support of burnishing element 6 in bearing bush 7. Burnishing element 6 is kept in position by ring 8 which ensures smooth running operation of the hydrostatic bearing. An appropriate magnitude of burnishing force $F_N$, applied by the tool on workpiece 14, is controlled by micro-hydraulic control unit 10.

Burnishing force $F_N$, applied by the tool, can be determined from:

$$F_N = p_1 \cdot \frac{\pi \cdot d_t{}^2}{4} - k_s \cdot h \qquad (1)$$

where:

$p_1$ - pressure over piston 2,
$d_t$ - piston 2 diameter,
$k_s$ - spring 3 stiffness,
h - displacement of the burnishing element 6 to operating position

The hydrostatic bearing support of burnishing element 6 is maintained on the condition that burnishing force $F_N$ and hydrostatic force of the bearing $F_H$ are equal.

$$F_N = F_H$$

$$(2)$$

where:

$$F_H = p_2 \cdot \frac{\pi \cdot d_{kn}^2}{4} \qquad\qquad (3)$$

$p_2$ - pressure in hydrostatic bearing (over burnishing element 6),
$d_{kn}$ - diameter of burnishing element 6.

When the tool is supplied with low pressure, single-circuit micro-hydraulic unit 10 is used (as shown in Fig. 4). Then, pressure over piston 2 and pressure in hydrostatic bearing satisfy the following equation.

$$p_1 = p_2 = p \qquad\qquad (4)$$

During work operation, burnishing force $F_N$ generated in the actuator is balanced by hydrostatic force $F_H$ generated in the bearing. Those are favourable conditions for the rolling operation of a burnishing element on the surface of a workpiece.

$$p \cdot \frac{\pi \cdot d_{kn}^2}{4} \geq p \cdot \frac{\pi \cdot d_t^2}{4} - k_s \cdot h \qquad\qquad (5)$$

The lubricating coolant passes through screen filter 9 and is then directed to control unit 10, where $p_1 = p_2 = p$. Then, the fluid flows towards micro-valve 11 that controls the actuator (piston 2 + cylinder 4) preset at fluid pressure $p_1$. The fluid with pressure $p_1$ is directed to the actuator and fluid with pressure $p_2$ to the hydrostatic bearing. Micro-valve 12 which controls bearing pressure is responsible for protecting the tool when piston internal space is reduced and pressure $p_1$ increases rapidly. Micro-valve 11 protects micro-hydraulic system 10 from overload. Micro-valve 12 also protects burnishing element 6 from ejection in a rapid and uncontrolled pressure $p_2$ surge in the hydrostatic bearing. Throttle check micro-valve 15, mounted before burnishing element 6, is supposed to stiffen and keep in position the hydrostatic bearing following short-duration drop of pressure $p_2$, i.e. it stabilises pressure in the bearing.

## Example II

The tool is constructed as in example I. For machining purposes, when burnishing element 6 with a small diameter (smaller than that of piston 2 diameter) is used, it is necessary to apply support roller 16, placed in ring 8, between burnishing bush 7 and burnishing element 6 (as shown in Fig. 2).
Burnishing ball 6 with diameter $d_{kn}$ is supported on a support roller 16 with diameter $d_{kp}$. Support roller 16 is to counterbalance, in hydrostatic bearing $F_H$, burnishing force $F_N$ generated by piston 2 of a tool with diameter $d_t$. Therefore, the diameter $d_{kp}$ of support roller 16 must be equal or greater than that ($d_t$) of piston 2.

$$d_{kp} \geq d_t \qquad\qquad (6)$$

and the diameter of burnishing ball 6:

$$d_{kn} \ll d_{kp} \qquad\qquad (7)$$

Micro-hydraulic unit 10 is fitted with wireless P/U pressure and N/U force transducers. Transducers are connected so that 'feedback' exists between both elements (as shown in Fig. 5). It enables on-line parameter control in burnishing operations conducted in micro-hydraulic control unit.

## Example III

The tool is constructed as in example I. Burnishing is conducted with great force. To reduce compression pressure at the burnishing head of a tool, 19 intermediate roller bearings are introduced between burnishing element 6 and support roller 14 (as shown in Fig. 3).

**Example IV**

The tool is constructed as in example I. Micro-valve 11 is a spool valve (as shown in Fig. 6). In a normal 'switch off' position, micro-valve 11 blocks fluid supply from spindle to actuator and to hydrostatic bearing. If the valve is switched on, fluid starts flowing and pressure $p$ increases both in actuator and hydrostatic bearing.

**Example V**

The tool is constructed as in example I. Micro-hydraulic system 10 is additionally fitted with blow off micro-valve 20. Micro-hydraulic unit 10 is a double-circuit system, where pressure $p_1 \neq p_2$. Blow off micro-valve 20 protects the system from overload which might happen following pressure surge over the acceptable level, e.g. caused by retracting piston 2 in cylinder 4.

**Claims**

1. A method of fluid pressure control in a hydrostatic burnishing tool, the tool is hydraulically powered by a lubricating coolant supplied from spindle (13) to the main body of the tool (1) through filter (9), the fluid is then directed to micro-hydraulic control unit (10), having all elements of the control system inside the main body of the tool, and it is divided so that the flow of lubricating coolant with pressure $p_1$ controlled by micro-valves (11) that control a one-way actuator consisting of piston (2) and cylinder (4) is directed over piston (2), and the flow with pressure $p_2$ controlled by micro-valves (12) that control the pressure in the hydrostatic bearing of the burnishing element (6), directed at burnishing element (6) whose bearing is supported in bearing bush (7).

2. The method according to claim 1 **characterized in that** support roller (16) is used.

3. The method according to claim 2 **characterized in that** intermediate roller bearings (19) are used.

4. A hydrostatic burnishing tool consisting of a main body (1), a piston (2), a cylinder (4), and an encasement (5) that make up a one-way actuator, a burnishing element (6), a bearing bush (7) and a ring (8), which has a micro-hydraulic control unit (10) powered by a lubricating coolant, piston (2), and micro-valves (11) that control the one-way actuator consisting of piston (2) and cylinder (4), micro-valves (12) that control pressure in the hydrostatic bearing and bearing of burnishing element (6), and the micro-hydraulic control unit (10) with all elements of the control system mounted inside the main body (1) of the tool and cylinder (4), encasement (5), piston (2), and a bearing bush (7) containing a pipe for supplying the lubricating coolant from the micro-hydraulic unit (10) to the burnishing element (6).

5. The tool according to claim 4 **characterized in that** it has support roller (16) placed in ring (4), between bearing bush (7) and burnishing element (6).

6. The tool according to claim 5 **characterized in that** it has intermediate roller bearings (19) placed in ring (4), between support roller (16) and burnishing element (6).

7. The tool according to claim 4 **characterized in that** its micro-hydraulic unit (10) is equipped with pressure transducer P/U (17) and force transducer N/U (18) connected so that 'feedback' exists between both transducers (17, 18).

8. The tool according to claim 4 **characterized in that** it has micro-hydraulic unit (10) equipped with blow off micro-valve (20) which controls the operation of the actuator.

**Patentansprüche**

1. Steuerungs- und Regelungsverfahren des Flüssigkeitsdrucks im hydrostatischen Werkzeug zum Prägepolieren, **dadurch gekennzeichnet, dass** das Werkzeug mit dem Kühlschmierfluid hydraulisch versorgt wird, das von der Spindel (13) durch den Filter (9) in das Gehäuse (1) zugeführt wird, das in die mikrohydraulische Steuerungs- und Regelungsanlage (10) so geleitet wird, dass aufgeteilte Flüssigkeitsströmung mit dem Druck $p_1$ durch die Steuerungsventile (11) kontrolliert wird, die die Arbeit des aus dem Kolben (2) und Zylinder (4) bestehenden einen Aktuator-Antriebs steuern, auf den Kolben (2) fließt, und die Strömung mit dem Druck $p_2$ durch die den Druck im hydrostatischen Lager steuernden Micro Steuerungsventil (12) kontrolliert wird, auf das Prägepolierteil (6) fließt, das hydrostatisch in der Pfanne (7) gelagert wird.

2. Das Verfahren nach Anspruch 1, **dadurch gekennzeichnet, dass** die Stützkugel (16) eingesetzt wird.

3. Das Verfahren nach Anspruch 2, **dadurch gekennzeichnet, dass** die zwischenliegenden Kugeln (19) eingesetzt werden.

4. Das hydrostatische Werkzeug zum Prägepolieren, ausgestattet mit dem Werkzeuggehäuse (1), Kolben (2) und Zylinder (4) und einer Ummantelung (5), die den Antrieb für einen Aktuator bilden, mit dem Prägepolierteil (6), der Pfanne (7) und dem Haltering (8), dass es mikrohydraulische Steuerungs- und Regelungsanlage (10) hat, die mit dem Kühlschmierfluid versorgt wird, dass es einen Kolben (2) und Zylinder (4), die Arbeit des Antriebs steuernden Micro Steuerungsventile (12), die den Druck im hydrostatische Lager des Prägepolierteils (6) besitzt, wobei die mikrohydraulische Steuerungs- und Regelungsanlage (10) sich im Gehäuse (1) des Werkzeugs befindet und es im Zylinder (4), in der Umhüllung (5), im Kolben (6) und in der Pfanne (7) einen Kanal gibt, der das Kühlschmierfluid von der mikrohydraulischen Anlage (10) in das Prägepolierteil (6) zuführt.

5. Das Werkzeug nach Anspruch 4, **dadurch gekennzeichnet, dass** es im Haltering (4), zwischen der Pfanne (7) und dem Prägepolierteil (6) eine Stützkugel (16) hat.

6. Das Werkzeug nach Anspruch 5, **dadurch gekennzeichnet, dass** es im Haltering (4), zwischen der Stützkugel (16) und dem Prägepolierteil (6) zwischenliegende Kugeln (19) hat.

**Revendications**

1. La méthode de contrôler et de régler la pression du liquide dans l'outil hydrostatique de brunissage, **caractérisée en ce que** l'outil est propulsé hydrauliquement avec du liquide de refroidissement injecté de la broche (13) à la partie centrale de l'outil à travers un filtre (9), ledit liquide étant ensuite dirigé vers l'unité du contrôle à l'intérieur de la partie centrale (10), équipé d'éléments pour distribuer le flux du liquide de refroidissement et pour régler sa pression $p_1$ avec les micro-valves (11) qui contrôlent l'actionneur à sens unique, se composant du piston (2) et du cylindre (4); le liquide se dirige vers le piston (2), et le flux $p_2$ réglé avec les micro-valves (12) contrôle la pression dans le palier hydrostatique (6) soutenant l'élément de brunissage (6) dont le palier est soutenu dans le coussinet de palier (7).

2. Modèle conforme à la revendication 1, **caractérisé en ce que** l'on utilise le rouleau porteur (16).

3. Modèle conforme à la revendication 2, **caractérisé en ce que** l'on utilise les roulements à rouleaux intermédiaires (19).

4. L'outil hydrostatique de brunissage se composant de la partie centrale (1), du piston (2) du cylindre (4) et des emboîtages (5), constituant l'actionneur à sens unique, l'élément de brunissage (6), le coussinet de palier (7) et le collier (8) avec le système microhydraulique du contrôle et réglage (10) propulsé avec le liquide de refroidissement, contenant le piston (2), les micro-valves (11) qui de contrôlent l'actionneur à sens unique, se composant du piston (2) et du cylindre (4), les micro-valves (12) qui contrôlent la pression dans le palier hydrostatique et le palier de l'élément de brunissage (6); tandis que le système microhydraulique (10) du contrôle et réglage se trouve dans la partie centrale (1) de l'outil, et dans le cylindre (4), dans l'emboîtage (5), dans le piston (2) et dans le coussinet de palier (7) il y un tuyau conduisant le liquid de refroidissement du système microhydraulique (10) à l'élément de brunissage (6).

5. L'outil conforme à la revendication 4, **caractérisé en ce que**'il contient le rouleau porteur (16) placé dans le collier (4), entre le palier (7) et l'élément de brunissage (6)

6. L'outil conforme à la revendication 5, **caractérisé en ce que**'il contient les roulements à rouleaux intermédiaires (19) placés dans le colier (4), entre le rouleau porteur (16) et l'élément de brunissage (6).

Fig. 1

Fig. 2

Fig. 3

8

## FIG 4

## FIG 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0353376 A1
- DE 19534631 A1
- EP 1275472 A2
- WO 2005023488 A1
- EP 0353427 A1